# EUROPÄISCHE PATENTANMELDUNG

(11) **EP 4 233 509 A2**
(43) Veröffentlichungstag der Anmeldung: **30.08.2023**
(21) Anmeldenummer: 23168938.1
(22) Anmeldetag: 29.03.2018
(51) Int. Cl.: A01C 7/20

(54) **VERFAHREN ZUM AUSSÄHEN VON WALDSAMEN**

(30) Priorität: 30.03.2017 DE 202017101886 U
(62) Teilanmeldung aus: 20164700.5
(71) Anmelder: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(57) **Zusammenfassung**

Vorrichtung zum Aussähen von Waldsamen, umfassend ein auf Rädern oder Raupen fahrendes, motorgetriebenes Arbeitsgerät mit einer Schnittstelle für ein Anbaugerät und ein Saataggregat oder Saatgerät, das ausgebildet ist, in Anbaustellung mit der Schnittstelle verbunden zu sein

## Beschreibung

Die Erfindung betrifft eine Vorrichtung zum Aussähen von Waldsamen mit einer bewegbaren Saatmaschine.

Für die Aussaat von Waldsamen bekannt sind motorgetriebene oder manuell und mit Hilfe von Zugtieren durch den Wald bewegte Saatmaschinen. Die EP 2 781 145 B1 beschreibt ein Scheibenräumgerät und Verfahren zur Herstellung von Saatstreifen für die Waldsaat von Nadelbaumarten. Die EP 2 944 176 beschreibt ein Waldsägerät und ein Verfahren zum Aussähen von Laubbaumarten. Bei der Aussaat mittels herkömmlicher Saatmaschinen wird die Lage der zu bearbeitenden Arbeitsfläche von der Bedienperson ermittelt und die Bearbeitung der Arbeitsflächen an die vor Ort vorliegenden Bedingungen angepasst. Dies ist anspruchsvoll, begrenzt die Saatleistung und kann zu Fehlern führen, indem das Saatgut auf falschen oder ungeeigneten Flächen ausgebracht wird. Ferner ist im Falle einer Beauftragung oder einer Lizenz zur Aussaat von Waldsamen der genauere Nachweis der erbrachten Leistung erschwert.

Davon ausgehend liegt der Erfindung die Aufgabe zugrunde, eine Vorrichtung zum Aussähen von Waldsamen mit einer bewegbaren Saatmaschine zu schaffen, welche Durchführung und Nachweis der Aussaat erleichtert.

Die Aufgabe wird durch eine Vorrichtung mit den Merkmalen von Anspruch 1 gelöst. Vorteilhafte Ausgestaltungen der Vorrichtung sind in Unteransprüchen angegeben.

Die erfindungsgemäße Vorrichtung zum Aussähen von Waldsamen mit einer bewegbaren Saatmaschine umfasst ein Ortungssystem.

Das Ortungssystem ermöglicht aus der Nähe und/oder aus der Ferne eine Positionsbestimmung der Saatmaschine, sodass jederzeit feststellbar ist, wo sich die Saatmaschine befindet. Hierdurch wird im Falle von Betriebsstörungen oder falls die Saatmaschine entwendet wird, das Auffinden der Saatmaschine erleichtert. Ferner ist es mit Hilfe des Ortungssystems möglich, die mittels der Saatmaschine erbrachte Saatleistung zu überprüfen, insbesondere die mittels der Saatmaschine zurückgelegten Strecken und bearbeiteten Flächen zu ermitteln. Hierdurch ist eine Kontrolle und/oder eine Aufzeichnung der korrekten Ausführung von Aufträgen und Ausübung von Lizenzen möglich. Die Kontrolle und/oder Aufzeichnung kann an der Saatmaschine und/oder von einer zentralen Stelle aus erfolgen. Gemäß einer Ausführungsart der Erfindung sind eine oder mehrere Saatmaschinen mit einem Ortungssystem ausgestattet. Sämtliche Saatmaschinen können dezentral und/oder von nur einer oder von mehreren zentralen Stellen überwacht werden. Gemäß einer weiteren Ausführungsart ist die dezentrale und/oder zentrale Stelle ein Smartphone, Tablet oder PC, vorzugsweise ein Tablet oder PC mit Zugang zu einem Telekommunikationsnetzwerk, vorzugsweise über ein Mobilfunkmodem.

Gemäß einer Ausführungsart umfasst das Ortungssystem eine Einrichtung zur Positionsbestimmung und einen Sender, vorzugsweise einen Mobilfunksender oder ein Mobiltelefon, mit dem die von der Einrichtung zur Positionsbestimmung ermittelten Positionsdaten drahtlos gesendet werden, sodass sie von einem räumlich entfernten Empfänger empfangen werden können. Gemäß einer bevorzugten Ausführungsart ist das Ortungssystem ein GPS-Tracker.

Gemäß einer weiteren Ausführungsart ist das Ortungssystem fest mit der Saatmaschine verbunden.

Gemäß einer weiteren Ausführungsart ist das Ortungssystem nicht ohne Zerstörung von der Saatmaschine lösbar. Gemäß einer weiteren Ausführungsart ist hierfür das Ortungssystem in einen Rahmen oder in ein anderes Strukturelement der Saatmaschine eingeschweißt.

Ferner wird die Aufgabe durch eine Vorrichtung zum Aussähen von Waldsamen mit einer bewegbaren Saatmaschine gelöst, die mindestens eine Einrichtung zum Erfassen der von der Saatmaschine erbrachten Saatleistung umfasst.

Dadurch, dass die Anordnung mindestens eine Einrichtung zum Erfassen der von der Saatmaschine erbrachten Saatleistung aufweist, kann die erfolgreiche Durchführung der Aussaat leicht kontrolliert und nachgewiesen werden. Hierdurch werden die Durchführung der Aussaat sowie die korrekte Ausführung von Aufträgen und Ausübung von Lizenzen insbesondere hinsichtlich zu bearbeitender Fläche, Saatstrecke, Ausbringungsmenge und/oder Art des Saatgutes erleichtert.

Gemäß einer weiteren Ausführungsart weist die vorgenannte Vorrichtung zum Aussähen von Waldsamen die Merkmale der Vorrichtung von mindestens einem der Ansprüche 1 bis 3 oder einer der zuvor beschriebenen Ausführungsarten auf. Weitere vorteilhafte Ausführungsarten der Vorrichtung sind in Unteransprüchen und nachfolgend angegeben.

Gemäß einer bevorzugten Ausführungsart ist die Einrichtung zum Erfassen der erbrachten Saatleistung eine Einrichtung zum Erfassen der Länge und/oder der Breite und/oder des Profils und/oder der Lage der zurückgelegten Saatstrecke oder Saatstrecken (Saatstrecke(n)) (z.B. entlang einer Saatrille oder einem Saatstreifen oder eines Saatplatzes) und/oder der Größe und/oder der Lage der bearbeiteten Arbeitsfläche oder Arbeitsflächen (Arbeitsfläche(n)) und/oder der ausgebrachten Saatgutmenge und/oder der ausgebrachten Saatgutart. Kurze begrenzte Saatstrecken bis 2 m, vorzugsweise bis 1 m, vorzugsweise bis 0,5 m werden als Saatplätze bezeichnet. Mehrere eng beieinanderliegende Saatplätze bilden einen größeren Saatplatz. Diese können in einem Abstand zueinander liegen oder einander berühren oder teilweise überdecken, insbesondere kreuzen. Das Säen von Saatplätzen wird auch als "Plätzesaat" bezeichnet. Durch Erfassen der Länge und/oder der Breite und/oder des Profils und/oder der Lage der Saatstrecke(n) kann die Ausführung der geplanten Aussaat nach Umfang und Gebiet sichergestellt werden. Dies gilt auch für die Erfassung der Größe und/oder der Lage der bearbeiteten Arbeitsfläche(n). Die optimale Länge der Saatstrecke(n) pro Flächeneinheit hängt von der Baumart und dem waldbaulichen Ziel des stehenden Waldbestands ab. Durch Erfassen der ausgebrachten Saatgutmenge kann sichergestellt werden, dass die für die erfolgreiche Aussaat vom Auftraggeber gewünschte bzw. die optimale Saatgutmenge ausgebracht wird. Die optimalen Saatgutmengen hängen von der jeweiligen Baumart und der Zielstellung für den Waldbestand ab und differieren stark. Durch Erfassen der Länge der Saatstrecke(n) und/oder der Breite der Saatstrecke(n) und/oder des Profils der Saatstrecke(n) und/oder der Lage der Saatstrecke(n) und/oder der ausgebrachten Saatgutmenge kann sichergestellt und nachgewiesen werden, dass optimale Parameter eingehalten werden. Durch Erfassen der ausgebrachten Saatgutart kann die Durchführung der beauftragten Aussaat hinsichtlich der Saatgutart kontrolliert und nachgewiesen werden.

Gemäß einer weiteren Ausführungsart ist die Einrichtung zum Erfassen der Länge der zurückgelegten Saatstrecke(n) ein Streckenzähler, der mit einem auf dem Boden abrollbaren Rad der Saatmaschine gekoppelt ist. Gemäß einer weiteren Ausführungsart ist der Streckenzähler ein mit dem Rad mechanisch gekoppelter mechanischer Streckenzähler, beispielsweise wie er bei einem Hodometer oder in Kraftfahrzeugen Verwendung findet. Bei einer anderen Ausführungsart ist der Streckenzähler ein mit einem die Umdrehung des Rades erfassenden ersten Sensor verbundener elektronischer Zähler. Hierbei können ebenfalls Systeme aus der Kraftfahrzeugtechnik Verwendung finden. Gemäß einer bevorzugten Ausführungsart ist der Streckenzähler plombiert, um Manipulationen zu verhindern.

Gemäß einer weiteren Ausführungsart ist die Einrichtung zum Ermitteln der Saatstrecke(n) eine Einrichtung zum Ermitteln der Position und eine damit verbundene Einrichtung zum Ermitteln der zurückgelegten Wegstrecke anhand der von der Einrichtung zum Ermitteln der Position ermittelten Positionen, wobei die Einrichtung zum Ermitteln der Position und die Einrichtung zum Ermitteln der zurückgelegten Wegstrecke an der Saatmaschine angeordnet oder tragbar ausgebildet sind, sodass sie von einer die Saatmaschine bei der Aussaat begleitenden Bedienperson tragbar sind. Diese Ausführungsart ermöglicht eine besonders präzise und gegen Manipulationen geschützte Ermittlung der zurückgelegten Wegstrecke.

Gemäß einer weiteren Ausführungsart ist die Einrichtung zum Ermitteln der Saatstrecke(n) drahtgebunden oder drahtlos mit einem Rechner (Computer) verbunden, in dem die Saatstrecke dokumentiert und/oder Bearbeitungen wie Lizenzabrechnungen ausgeführt werden. Die jeweiligen Daten können mittels einer entsprechenden Software verarbeitet werden. Gemäß einer weiteren Ausführungsart wird/werden die Saatstrecke(n) gemeinsam mit Positionsdaten, dem aktuellen Datum, Bearbeitungszeit, einer Auftragsidentifikation, Identifikation der Bedienperson und/oder Wetterdaten gespeichert, um die Dokumentation und/oder sonstige Weiterverarbeitungen zu erleichtern. Gemäß einer weiteren Ausführungsart werden die Daten zumindest teilweise automatisch ermittelt und von der Einrichtung zum Ermitteln der Saatstrecke(n) an einen Rechner übermittelt. Gemäß einer weiteren Ausführungsart werden die Daten wie Auftragsidentifikation, Identifikation der Bedienperson, Wetterdaten, Datum, Bearbeitungszeit und/oder Positionsdaten von der Bedienperson eingegeben und übermittelt. Gemäß einer weiteren Ausführungsart wird die Bedienperson über eine Ein-/Ausgabeeinrichtung zur Eingabe der Daten aufgefordert.

Gemäß einer weiteren Ausführungsart umfasst die Einrichtung zum Erfassen der ausgebrachten Saatgutmenge mindestens einen die Ausbringungsmenge einer Dosiereinrichtung der Saatmaschine zum Ausbringen des Saatgutes erfassenden zweiten Sensor und/oder umfasst die Einrichtung zum Erfassen der ausgebrachten Saatgutart zumindest einen die von der Dosiereinrichtung abgegebene Saatgutart erfassenden dritten Sensor und/oder umfasst die Einrichtung zum Erfassen der ausgebrachten Saatgutmenge und/oder der Saatgutart eine Eingabeeinrichtung zum Eingeben der Saatgutmenge und/oder der Saatgutart.

Gemäß einer weiteren Ausführungsart ist die Einrichtung zum Erfassen der ausgebrachten Saatgutmenge ein Zählwerk, das mit einem Dosierelement der Dosiereinrichtung mechanisch gekoppelt ist, beispielsweise mit einem Zellenrad eines Zellenraddosierers. Gemäß einer anderen Ausführungsart umfasst die Zähleinrichtung eine die Ausbringung der Dosiereinrichtung erfassenden zweiten Sensor und einen damit verbundenen elektronischen Zähler. Beispielsweise erfasst der zweite Sensor die Drehungen eines Zellenrades eines Zellenraddosierers. Gemäß einer weiteren Ausführungsart ist der dritte Sensor eine Kamera zum optischen Erfassen des ausgebrachten Saatguts oder eine Einrichtung zum Erfassen von Parametern (z.B. mittlere Korngröße, Korngrößenverteilung, Farbe, Gewicht des Saatgutes), die eine Bestimmung der Saatgutart ermöglichen. Gemäß einer weiteren Ausführungsart ist die Eingabeeinrichtung eine Tastatur oder ein Mikrofon. Bevorzugt ist sie eine Ein-/Ausgabeeinrichtung, die es beispielsweise außer der Eingabe ermöglicht, eine Aufforderung zur Eingabe und/oder eine Bestätigung einer Eingabe auszugeben, beispielsweise ein Touchscreen oder ein Headset.

Ferner wird die Aufgabe durch eine Vorrichtung zum Aussähen von Waldsamen mit einer bewegbaren Saatmaschine gelöst, umfassend
- eine Einrichtung zur Positionsbestimmung, die an der Saatmaschine angeordnet oder ausgebildet ist, von einer die Saatmaschine beim Aussähen begleitenden Bedienperson getragen zu werden,
- eine Einrichtung zur Bereitstellung eines Bearbeitungsplans zur Abarbeitung von Arbeitsflächen, die auf der Saatmaschine angeordnet ist oder von einer die Saatmaschine begleitenden Bedienperson tragbar ist, und
- eine elektronische Steuerungseinrichtung zum Ermitteln von Steuerungsanweisungen, die anhand der von der Einrichtung zur Positionsbestimmung ermittelten Positionsdaten Steuerungsanweisungen für das Abarbeiten der Arbeitsflächen gemäß dem Bearbeitungsplan bereitstellt.

Bei der erfindungsgemäßen Vorrichtung wird durch die Bestimmung der jeweiligen Position der Saatmaschine, die Bereitstellung eines Bearbeitungsplanes und die Bereitstellung von Steuerungsanweisungen zum Steuern der Saatmaschine, sodass bei den jeweils ermittelten Positionen der Bearbeitungsplan zur Ausführung kommt, die korrekte Ausführung der geplanten Aussaat und deren Dokumentation unterstützt. Die Steuerungsanweisungen sind beispielsweise Anweisungen, die einer Bedienperson mittels einer Ausgabeeinrichtung gegeben werden, die auf der Saatmaschine angeordnet oder von der Bedienperson mitgeführt wird. Bei der Ausgabeeinrichtung handelt es sich beispielsweise um einen Lautsprecher, einen Kopfhörer und/oder um ein Display.

Gemäß einer Ausführungsart der Erfindung weist die vorgenannte Vorrichtung zum Aussähen von Waldsamen die Merkmale der Vorrichtung von einem der Ansprüche 1 bis 5 oder einer der zuvor beschriebenen Ausführungsarten auf. Weitere vorteilhafte Ausführungsarten der Vorrichtung sind in Unteransprüchen und nachfolgend angegeben.

Gemäß einer anderen Ausführungsart sind an der Saatmaschine mit der elektronischen Steuerungseinrichtung verbundene Aktoren vorhanden, die ausgebildet sind, nach Maßgabe der von der elektronischen Steuerungseinrichtung erteilten Steuerungsanweisungen automatisch die Saatmaschine zu steuern, z.B. diese zu lenken und/oder die Abgabe des Saatgutes zu steuern. Diese Ausführungsart ermöglicht ein autonomes Abarbeiten des Bearbeitungsplanes durch eine motorgetriebene Saatmaschine. Es ist aber auch möglich, die Saatmaschine hierfür mittels eines Zugtieres oder mittels einer Person fortzubewegen, wobei z.B. die Lenkung der Saatmaschine und/oder die Steuerung der Abgabe des Saatgutes von der Automatik übernommen wird.

Der Bearbeitungsplan kann beispielsweise von der Bedienperson so ermittelt werden, dass die geplante Aussaat sichergestellt wird, und von der Bedienperson eingegeben werden. Die Bedienperson kann sich hierbei Hilfsmitteln bedienen, wie beispielsweise Kartenmaterialien, in denen der Baumbestand und die Topographie des Geländes eingetragen ist, Fotografien mittels Satelliten oder anderer gesteuerter Flugobjekte oder Erkenntnissen oder Aufzeichnungen aufgrund Begehung der Arbeitsfläche. Das Kartenmaterial kann in physischer oder in elektronischer Form vorliegen und verarbeitet werden. Gemäß einer weiteren Ausführungsart wird der Bearbeitungsplan unter Auswertung der vorerwähnten Unterlagen automatisch erstellt. Für die Erstellung des Bearbeitungsplans können gemäß einer weiteren Ausführungsart erfolgreich erprobte Strategien verwendet werden, beispielsweise hinsichtlich einer erfolgreichen Aussaat von Saatgut auf einem Gelände, das eine hierfür besonders geeignete Topographie, Ausrichtung oder Pflanzenbestand aufweist. Auch die Beschaffenheit des Bodens kann ggf. über in einer Datenbank hinterlegte Daten und/oder Untersuchungen vor Ort in die Erstellung des Bearbeitungsplanes einflie-ßen. Gemäß einer einfachen Ausführungsart besteht der Bearbeitungsplan in der Vorgabe von bestimmten geographischen Koordinaten, die nacheinander von der Saatmaschine angefahren werden müssen. Hierbei ermittelt die Steuerungseinrichtung die Strecke zwischen den vorgegebenen Koordinaten selbsttätig. Gemäß einer weiteren Ausführungsart gibt der Bearbeitungsplan der Saatmaschine die zurückzulegende Strecke vor. Gemäß einer weiteren Ausführungsart weist die Saatmaschine mindestens einen vierten Sensor auf, der lokale Hindernisse oder andere Störungen ermittelt und ermittelt die Steuerungseinrichtung eine Änderung der Bearbeitungsstrecke, welche die Störung umgeht.

Gemäß einer weiteren Ausführungsart umfasst die Vorrichtung ein Navigationssystem, welches mindestens eine der folgenden Einrichtungen umfasst: Einrichtung zur Positionsbestimmung, Einrichtung zur Vorgabe von Arbeitsflächen, Einrichtung zur Festlegung eines Bearbeitungsplanes.

Gemäß einer weiteren Ausführungsart umfasst die Saatmaschine eine Blockiereinrichtung, die das Ausbringen von Saatgut blockiert, wenn die Einrichtung zum Erfassen der Saatleistung eine Betriebsstörung aufweist und/oder angeforderte Daten nicht zur Verfügung gestellt werden und/oder das Ortungssystem von der Saatmaschine getrennt oder nicht in Betrieb ist, und das Ausbringen von Saatgut nicht blockiert, wenn die Einrichtung zum Erfassen der Saatleistung störungsfrei ist, und/oder das Ortungssystem mit der Saatmaschine verbunden ist und in Betrieb ist und/oder angeforderte Daten eingegeben sind. Diese Ausgestaltung verhindert den Betrieb der Saatmaschine, wenn eine Sicherstellung bzw. Dokumentation der geplanten Saatleistung nicht möglich ist.

Gemäß einer weiteren Ausführungsart ist die Einrichtung zur Positionsbestimmung ein Satelliten-Navigationssystem wie GPS oder Galileo oder ein Peilsystem. Gemäß einer weiteren Ausführungsart umfasst das Peilsystem mindestens einen Peilsender und einen Peilempfänger, wobei der Peilempfänger auf der Saatmaschine angeordnet ist oder so ausgebildet ist, dass er von einer die Saatmaschine beim Aussähen begleitenden Bedienperson tragbar ist.

Gemäß einer weiteren Ausführungsart ist die Saatmaschine ein von Mensch und/oder Tier gezogene und/oder geschobene Saatmaschine, ein motorgetriebenes Saatgerät oder Saataggregat oder Arbeitsgerät mit mindestens einem angebauten Saatgerät oder Saataggregat, insbesondere eine Forstmaschine, ein Bagger, Kran oder Greifer mit mindestens einem angebauten Saatgerät oder Saataggregat oder ein seilgetriebenes Saatgerät oder Saataggregat oder Arbeitsgerät mit mindestens einem angebauten Saatgerät oder Saataggregat oder ein Handsägerät.

Ein Saatgerät ist ein bewegliches Werkzeug oder Hilfsmittel zum Aussäen von Waldsamen. Ein Saataggregat ist eine Einheit aus mehreren zusammenwirkenden Saatgeräten.

Gemäß einer weiteren Ausführungsart ist das motorgetriebene Arbeitsgerät ein durch mindestens einen Verbrennungsmotor und/oder mindestens einen Elektromotor angetriebenes Arbeitsgerät.

Gemäß einer weiteren Ausführungsart ist das motorgetriebene Saatgerät oder Saataggregat oder Arbeitsgerät mit mindestens einem angebauten Saatgerät ein selbstfahrendes (z.B. ferngesteuertes) oder autonom fahrendes (selbständig fahrendes) Fahrzeug.

Gemäß einer weiteren Ausführungsart fährt das Saatgerät oder Saataggregat oder Arbeitsgerät auf Rädern oder auf Raupen, d.h. ist ein Räderfahrzeug oder ein Kettenfahrzeug.

Ferner wird die Aufgabe durch eine Vorrichtung zum Aussähen von Waldsamen gelöst, umfassend ein motorgetriebenes Arbeitsgerät mit einem Greifwerkzeug und/oder einer Schnittstelle für ein Anbaugerät und ein Saataggregat oder Saatgerät, das ausgebildet ist, in Anbaustellung von dem Greifwerkzeug gegriffen zu werden und/oder mit der Schnittstelle verbunden zu sein.

Die erfindungsgemäße Vorrichtung ist auf einfache Weise durch Verbinden eines Saataggregates oder Saatgerätes mit einem motorgetriebenen Arbeitsgerät zusammenstellbar. Bei dem motorgetriebenen Arbeitsgerät kann es sich um ein herkömmliches Arbeitsgerät handeln, das ohnehin in einem Forstbetrieb oder dergleichen vorhanden ist. Gemäß einer Ausführungsart handelt es sich bei dem motorgetriebenen Arbeitsgerät um eine Forstmaschine (Waldmaschine), einen Minibagger oder anderen Bagger oder einen Kran.

Gemäß einer weiteren Ausführungsart weist die vorgenannte Vorrichtung zum Aussähen von Waldsamen die Merkmale der Vorrichtung von einem der Ansprüche 1 bis 12 oder einer der zuvor beschriebenen Ausführungsarten auf.

Vorteilhafte Ausführungsarten der Vorrichtung sind in Unteransprüchen und nachfolgend angegeben.

Die Verbindung des Saataggregates oder Saatgerätes mit dem motorgetriebenen Arbeitsgerät kann auf einfache Weise dadurch hergestellt werden, dass es von einem Greifwerkzeug des selbstfahrenden Arbeitsgerätes gegriffen oder mit einer Schnittstelle für ein Anbaugerät des motorgetriebenen Arbeitsgerätes verbunden wird.

Bei der Schnittstelle kann es sich um eine standardisierte Schnittstelle handeln, die auch für andere Arbeitsgeräte nutzbar ist. Gemäß einer weiteren Ausführungsart umfasst die Schnittstelle Einrichtungen zum Fixieren des Anbaugerätes am Arbeitsgerät, insbesondere an einem Ausleger des Arbeitsgerätes. Gemäß einer weiteren Ausführungsart umfasst sie Einrichtungen zum Übertragen einer Axialbewegung, einer Drehbewegung oder einer anderen Bewegung vom Arbeitsgerät auf das Anbaugerät. Diese Einrichtungen können zum Antreiben von Scheiben und/oder eines Dosiergerätes für Saatgut des Saataggregates oder Saatgerätes benutzt werden. Gemäß einer anderen Ausführungsart werden die Scheiben gedreht, indem das Saataggregat oder Saatgerät mittels des Arbeitsgerätes auf dem Waldboden verlagert wird, wobei die Scheiben abrollen. Hierbei kann ein auf dem Saataggregat oder Saatgerät angeordnetes Dosiergerät von den Scheiben angetrieben werden.

Gemäß einer weiteren Ausführungsart umfasst die Vorrichtung einen Adapter, der ausgebildet ist, das Saatgerät oder Saataggregat mit dem Greifwerkzeug und/oder mit der Schnittstelle zu verbinden.

Für die Verbindung bzw. das Aufnehmen des Saataggregates oder Saatgerätes von einem Greifwerkzeug hat gemäß einer weiteren Ausführungsart das Saataggregat oder Saatgerät eine Außenoberfläche, die komplementär zu der Innenoberfläche des Greifwerkzeugs in einer Stellung ausgebildet ist, die dieses beim Greifen eines Gegenstandes annimmt. Gemäß einer weiteren Ausführungsart handelt es sich bei dem Greifwerkzeug um einen Zweischalengreifer oder um einen Mehrschalengreifer, der schalenförmige Greifelemente aufweist, die um horizontale Achsen aus einer geöffneten Stellung in einer mehr oder weniger geschlossenen Stellung schwenkbar sind. Gemäß einer weiteren Ausführungsart ist die Außenoberfläche des Saataggregates oder Saatgerätes so ausgebildet, dass sie komplementär zu der Innenoberfläche der Greifelemente des Greifwerkzeugs in zumindest teilweise zusammengeschwenkter Stellung ist. Somit liegt das Greifwerkzeug mit den Greifelementen eng und flächig anliegend an Saataggregat oder Saatgerät an, sodass das Greifwerkzeug das Saataggregat oder Saatgerät mehr oder weniger spielfrei halten und führen kann.

Gemäß einer weiteren Ausführungsart ist das Greifwerkzeug oder die Schnittstelle am Ende eines Auslegers des Arbeitsgerätes angeordnet. Gemäß einer weiteren Ausführungsart ist der Ausleger ein Knickarm oder ein Teleskoparm. Hierfür können herkömmliche Arbeitsgeräte mit Auslegern verwendet werden. Durch Bewegen des Auslegers kann das Arbeitsgerät des Saataggregat oder Saatgerät entlang einer Saatstrecke verlagern. Hierbei kann das Arbeitsgerät auf einer vorgegebenen Fahrspur stehen oder entlang einer vorgegebenen Fahrspur verfahren werden und Arbeitsflächen in einem größeren Bereich neben der Fahrspur bearbeiten. Derartige Fahrspuren (z.B. Rückegassen) sind im Forst vielfach mit einem Abstand von 40 m oder 20 m angelegt. Durch Verlagern des Saatgerätes oder Saataggregates von den Fahrspuren aus können hohe Arbeitsgeschwindigkeiten erreicht und unwegsames oder steiles Gelände bearbeitet werden. Zudem wird hierdurch Bodenverdichtung vermieden.

Gemäß einer weiteren Ausführungsart weist das Arbeitsgerät oder das Saataggregat oder Saatgerät eine Tiefenbegrenzung zum Begrenzen der Eindringtiefe des Saatstreifens oder der Saatrille in den Boden auf. Gemäß einer weiteren Ausführungsart ist die Tiefenbegrenzung ein mit einem Ausleger oder einem Greifwerkzeug oder einem Saataggregat oder Saataggregat gekoppelte Rolleneinrichtung, die die Eindringtiefe des Saataggregats oder Saatgeräts in den Waldboden begrenzt. Gemäß einer weiteren Ausführungsart ist die Tiefenbegrenzung mit dem Saatgerät oder Saataggregat fest verbunden.

Gemäß einer weiteren Ausführungsart umfasst die Tiefenbegrenzung mindestens einen Sensor, der ausgebildet ist, den Abstand des Sensors von der Bodenoberfläche zu erfassen, eine mit dem Sensor verbundene Steuerungseinrichtung und eine mit der Steuerungseinrichtung verbundene Stelleinrichtung, die ausgebildet ist, die Lage des Saatgeräts oder des Saataggregats relativ zur Bodenoberfläche auf einen vorgegebenen Wert einzustellen.

Nachstehend sind verschiedene erfindungsgemäße Vorrichtungen und vorteilhafte Ausführungsarten derselben angegeben:
1. Vorrichtung zum Aussähen von Waldsamen mit einer bewegbaren Saatmaschine, umfassend ein Ortungssystem.
2. Vorrichtung nach Ziffer 1, bei der das Ortungssystem ein GPS-Tracker ist.
3. Vorrichtung zum Aussähen von Waldsamen mit einer bewegbaren Saatmaschine umfassend mindestens eine Einrichtung zum Erfassen der von der Saatmaschine erbrachten Saatleistung.
4. Vorrichtung nach Ziffer 3 und einer der Ziffern 1 oder 2.
5. Vorrichtung nach Ziffer 3 oder 4, bei der die Einrichtung zum Erfassen der erbrachten Saatleistung eine Einrichtung zum Erfassen der Länge der und/oder der Lage der zurückgelegten Saatstrecke oder Saatstrecken und/oder der Größe und/oder der Breite und/oder des Profils und/oder der Lage der bearbeiteten Arbeitsfläche oder Arbeitsflächen und/oder der ausgebrachten Saatgutmenge und/oder der ausgebrachten Saatgutart ist.
6. Vorrichtung gemäß Ziffer 5, bei der die Einrichtung zum Erfassen der Länge der zurückgelegten Saatstrecke(n) ein Streckenzähler ist, der mit einem auf dem Boden abrollbaren Rad der Saatmaschine gekoppelt ist.
7. Vorrichtung nach Ziffer 6, bei der der Streckenzähler ein mit dem Rad mechanisch gekoppelter mechanischer Streckenzähler oder ein mit einem die Umdrehung des Rades erfassenden ersten Sensor verbundener elektronischer Streckenzähler ist.
8. Vorrichtung nach einer der Ziffern 3 bis 7, bei der die Einrichtung zum Ermitteln der Saatstrecke eine Einrichtung zum Ermitteln der Position und eine damit verbundene Einrichtung zum Ermitteln der zurückgelegten Wegstrecke anhand der von der Einrichtung zum Ermitteln der Position ermittelten Positionen umfasst, wobei die Einrichtung zum Ermitteln der Position und die Einrichtung zum Ermitteln der zurückgelegten Wegstrecke an der Saatmaschine angeordnet sind oder ausgebildet sind, sodass sie von einer die Saatmaschine bei der Aussaat begleitenden Bedienperson tragbar sind.
9. Vorrichtung nach einer der Ziffern 3 bis 8, bei der die Einrichtung zum Erfassen der ausgebrachten Saatgutmenge mindestens einen die Ausbringung einer Dosiereinrichtung der Saatmaschine zum Ausbringen des Saatgutes erfassende Zähleinrichtung umfasst und/oder bei der die Einrichtung zum Erfassen der ausgebrachten Saatgutart einen die von der Dosiereinrichtung abgegebene Saatgutart erfassenden dritten Sensor umfasst und/oder bei der die Einrichtung zum Erfassen der ausgebrachten Saatmenge und/oder der Saatgutart eine Eingabeeinrichtung zum Eingeben der Saatgutmenge und/oder der Saatgutart umfasst.
10. Vorrichtung zur Aussaat von Waldsamen mit einer bewegbaren Saatmaschine umfassend:
   - eine Einrichtung zur Positionsbestimmung, die an der Saatmaschine angeordnet oder ausgebildet ist, von einer die Saatmaschine beim Aussähen begleitenden Bedienperson getragen zu werden,
   - eine Einrichtung zur Bereitstellung eines Bearbeitungsplanes zur Abarbeitung von Arbeitsflächen, die auf der Saatmaschine angeordnet ist oder von einer die Saatmaschine begleitenden Bedienperson tragbar ist, und
   - eine elektronische Steuerungseinrichtung zum Ermitteln von Steuerungsanweisungen, die anhand der von der Einrichtung zur Positionsbestimmung ermittelten Positionsdaten Steuerungsanweisungen für das Abarbeiten der Arbeitsflächen gemäß dem Bearbeitungsplan bereitstellt.
11. Vorrichtung nach Ziffer 10 und einer der Ziffern 1 bis 9.
12. Vorrichtung nach Ziffer 10 oder 11, umfassend eine Ausgabeeinrichtung, die an der Saatmaschine angeordnet ist oder von einer die Saatmaschine beim Aussähen begleitenden Bedienperson tragbar ist, um Steuerungsanweisungen auszugeben.
13. Vorrichtung nach einer der Ziffern 10 bis 12, umfassend an der Saatmaschine angeordnete, mit der elektronischen Steuerungseinrichtung verbundene Aktoren, die ausgebildet sind, nach Maßgabe der von der elektronischen Steuerungseinrichtung erteilten Steuerungsanweisungen die Saatmaschine automatisch zu steuern.
14. Vorrichtung nach einer der Ziffern 10 bis 13, umfassend eine Einrichtung zum Speichern der geographischen Lage einer oder mehrerer Arbeitsflächen, auf denen das Saatgut auszusähen ist, wobei die Steuerungseinrichtung die einen oder mehreren Arbeitsflächen entsprechend dem vorgegebenen Bearbeitungsplan abarbeitet.
15. Vorrichtung nach einer der Ziffern 10 bis 14, umfassend ein Navigationssystem, welches mindestens eine der folgenden Einrichtungen umfasst: Einrichtung zur Positionsbestimmung, Einrichtung zur Vorgabe von Arbeitsflächen, Einrichtung zur Festlegung eines Bearbeitungsplans.
16. Vorrichtung nach einer der Ziffern 1 bis 15, bei der die Saatmaschine eine Blockiereinrichtung umfasst, die das Ausbringen von Saatgut blockiert, wenn die Einrichtung zum Erfassen der Saatleistung eine Betriebsstörung aufweist und/oder das Ortungssystem von der Saatmaschine getrennt ist oder nicht in Betrieb ist und/oder angeforderte Daten nicht zur Verfügung gestellt werden und das Ausbringen von Saatgut nicht blockiert, wenn die Einrichtung zum Erfassen der Saatleistung störungsfrei ist und/oder das Ortungssystem mit der Saatmaschine verbunden ist und in Betrieb ist und/oder angeforderte Daten eingegeben sind.
17. Vorrichtung nach einer der Ziffern 1 bis 16, bei der die Einrichtung zur Positionsbestimmung ein Satelliten-Navigationssystem wie GPS oder Galileo oder ein Peilsystem ist.
18. Vorrichtung nach einer der Ziffern 1 bis 17, bei der die Saatmaschine eine von Mensch und/oder Tier gezogene und/oder geschobene Saatmaschine, ein motorgetriebenes Saatgerät oder Saataggregat oder Arbeitsgerät mit mindestens einem angebautem Saatgerät oder Saataggregat, insbesondere eine Forstmaschine, ein Bagger, Kran oder Greifer mit mindestens einem angebautem Saatgerät oder Saataggregat oder ein seilgetriebenes Saatgerät oder Saataggregat oder Arbeitsgerät mit mindestens einem angebautem Saatgerät oder Saataggregat, oder ein Handsägerät ist.
19. Vorrichtung zum Aussähen von Waldsamen umfassend ein motorgetriebenes Arbeitsgerät mit einem Greifwerkzeug oder eine Schnittstelle für ein Anbaugerät und ein Saatgerät oder ein Saataggregat, das ausgebildet ist, in Anbaustellung von dem Greifwerkzeug gegriffen zu werden und/oder mit der Schnittstelle verbunden zu sein.
20. Vorrichtung nach Ziffer 19 und einer der Ziffern 1 bis 18.
21. Vorrichtung nach Ziffer 19 oder 20, bei der das Saatgerät oder Saataggregat eine Außenoberfläche hat, die komplementär zu der Innenoberfläche des Greifwerkzeuges in einer Stellung ist, die dieses beim Greifen eines Gegenstandes annimmt.
22. Vorrichtung nach einer der Ziffern 19 bis 21, bei der das Greifwerkzeug oder die Schnittstelle am Ende eines Auslegers des Arbeitsgerätes angeordnet ist.
23. Vorrichtung nach Ziffer 22, bei der der Ausleger ein Knickarm oder ein Teleskoparm ist.
24. Vorrichtung nach einer der Ziffern 19 bis 23, bei der das Arbeitsgerät eine Forstmaschine, ein Bagger oder ein Kran ist.
25. Vorrichtung nach einer der Ziffern 19 bis 24, bei der das Arbeitsgerät durch mindestens einen Verbrennungsmotor und/oder durch mindestens einen Elektromotor angetrieben ist und/oder bei der das Arbeitsgerät auf Rädern oder auf Raupen fährt.
26. Vorrichtung nach einer der Ziffern 19 bis 25, bei der das Arbeitsgerät oder das Saataggregat oder Saatgerät eine Tiefenbegrenzung aufweist, die die Eindringtiefe des Saataggregats oder Saatgeräts in den Waldboden begrenzt.

Die Erfindung wird nachfolgend anhand der anliegenden Zeichnungen von Ausführungsbeispielen näher erläutert.

In den Zeichnungen zeigen:
- Fig. 1: einen Raupenbagger mit Mehrarmgreifer und Scheibenräumgerät zum Herstellen von Saatstreifen in einer Perspektivansicht von vorn und von der Seite;
- Fig. 2: einen weiteren Raupenbagger mit Mehrarmgreifer und Scheibenräumgerät in einer Ansicht von der Seite;
- Fig. 3: einen weiteren Raupenbagger mit Mehrarmgreifer und Waldsägerät mit gezahnten Scheiben in einer Perspektivansicht von vorn und von der Seite;
- Fig. 4: ein autonom fahrendes Waldarbeitsgerät mit Scheibenräumgerät in einer Perspektivansicht von vorn und von der Seite;
- Fig. 5: eine Forstmaschine mit Mehrarmgreifer und Scheibenräumgerät in einer Ansicht von vorn und von der Seite;
- Fig. 6: dieselbe Forstmaschine mit Waldsägerät mit gezahnten Scheiben in einer Perspektivansicht von vorn und von der Seite;
- Fig. 7: Bearbeitungsschema bei der Durchführung von Waldsaaten ausgehend von einer Fahrspur in der Draufsicht.

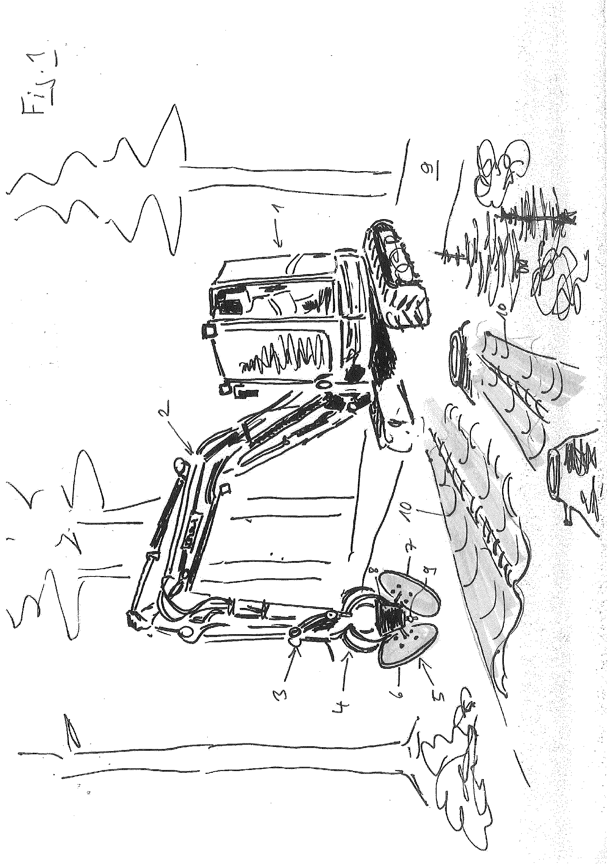

Gemäß Fig. 1 hat ein Raupenbagger 1 am Ende eines Auslegers 2 in Form eines Knickarmes eine Schnittstelle 3 für ein Anbaugerät. An der Schnittstelle 3 ist ein Greifwerkzeug 4 in Form eines Mehrarmgreifers montiert.

Das Greifwerkzeug 4 greift ein Scheibenräumgerät 5 zur Herstellung von Saatstreifen für die Waldsaat von Nadelbaumarten.

Das Scheibenräumgerät weist eine Anordnung von Scheiben 6, 7, einen Vorratsbehälter 8 und eine Dosiervorrichtung 9 für Saatgut auf, wie in der EP 2 781 145 B1 beschrieben. Im Unterschied zu dem darin beschriebenen Scheibenräumgerät weist das Scheibenräumgerät 5 jedoch nur einen kompakten Geräteträger in Form eines kurzen ersten Profilträgers auf, an dem die Drehachsen gehalten sind, welche die beiden Scheiben 6, 7 lagern. Außerdem weist das Scheibenräumgerät 5 keine zusätzliche Stützachse auf.

Zentral zwischen den beiden Scheiben sitzt der Vorratsbehälter 8. Die Außenoberfläche des Vorratsbehälters ist vorzugsweise so geformt, dass sie überall an der Innenoberfläche des Mehrarmgreifers in einem teilweise geschlossenem Greifzustand anliegt. Infolgedessen kann der Scheibenräumer 5 einfach durch teilweises Schlie-ßen des Greifwerkzeugs 4 um den Vorratsbehälter herum gekoppelt werden.

Ausgehend von einer Fahrspur 9 ist der Ausleger 2 manövrierbar, sodass das Scheibenräumgerät 5 beidseitig der Fahrspur 9 Saatstrecken 10 bearbeitet.

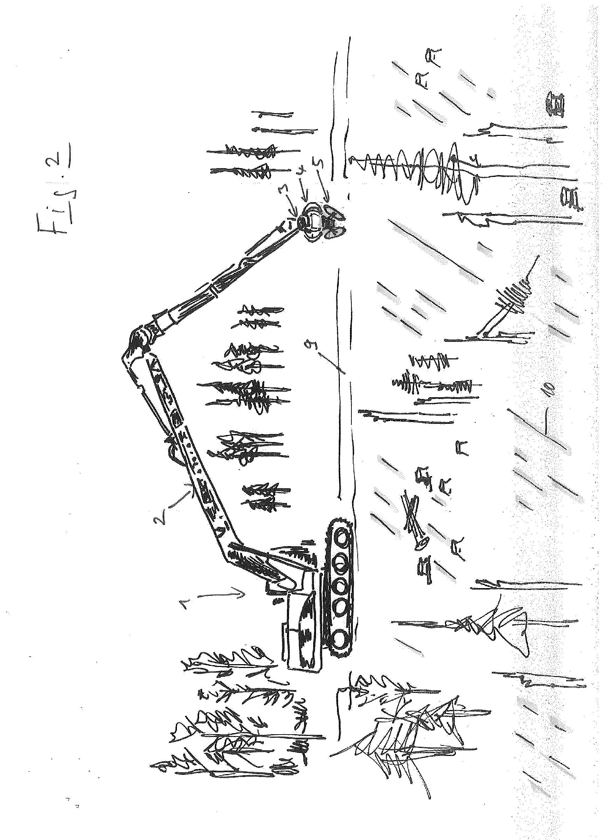

Gemäß Fig. 2 kann ein Raupenbagger 1 mit einem längeren Ausleger 2 beidseitig der Fahrspur 9 größere Bereiche mit Saatstrecken 10 versehen, u.a. Böschungen und Hänge.

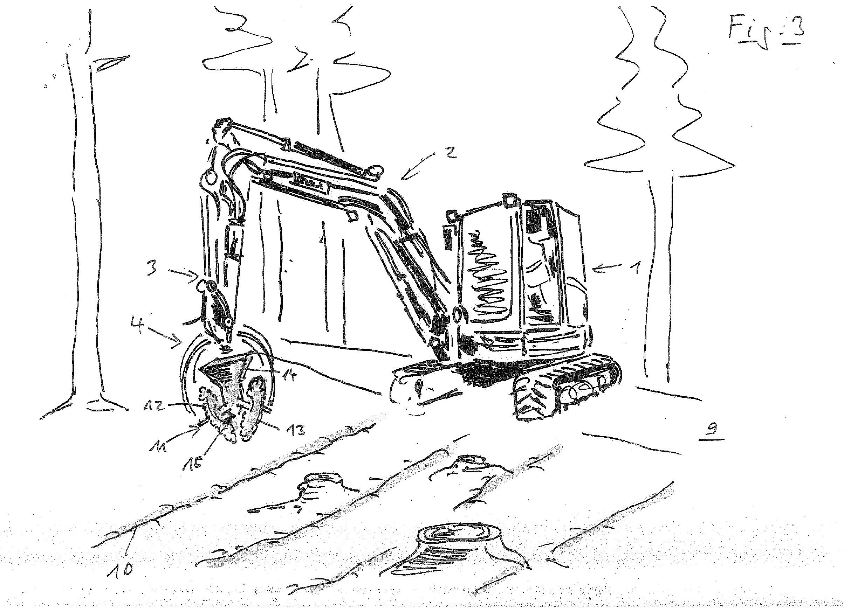

Gemäß Fig. 3 ist der Raupenbagger 1 mit einem Waldsägerät 11 zur Aussaat schwerfrüchtiger Laubbaumarten gekoppelt, das im Wesentlichen gemäß EP 2 944 176 B1 ausgebildet ist. Im Unterschied zu dem darin beschriebenen Waldsägerät sind die Lagerwellen der gezahnten Scheiben 12, 13 an einem kompakten Geräteträger gelagert, der auch einen Vorratsbehälter 14 für Saatgut und eine Dosiervorrichtung 15 trägt. Das Waldsägerät 11 weist keinen Schutzrahmen, keine Halterung für Zusatzgewichte und auch keinen Griff für die Manipulation des Gerätes im Gelände auf.

Die Außenoberfläche des Vorratsbehälters 14 ist wiederum so ausgebildet, dass dieser von dem Greifwerkzeug 4 gut gegriffen werden kann.

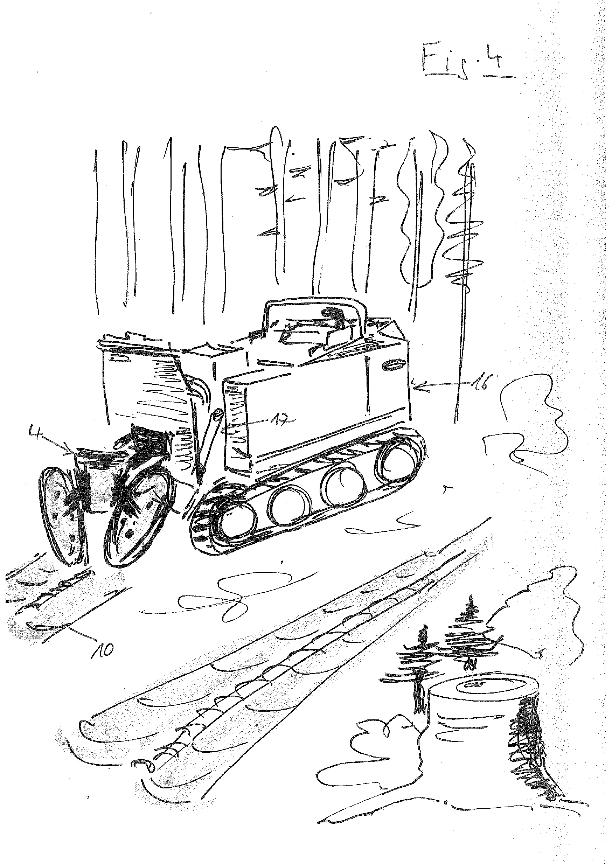

Gemäß Fig. 4 ist ein autonom fahrendes Waldarbeitsgerät 16 an einer Schnittstelle 17, die auch zur Aufnahme eines Fräsgerätes oder eines Räumgerätes dienen kann, mit einem Scheibenräumgerät 4 bestückt. Das Scheibenräumgerät 4 hat eine Schnittstelle, die komplementär zu der Schnittstelle des Waldarbeitsgerätes 16 ausgebildet ist, um mit diesem verbunden zu werden.

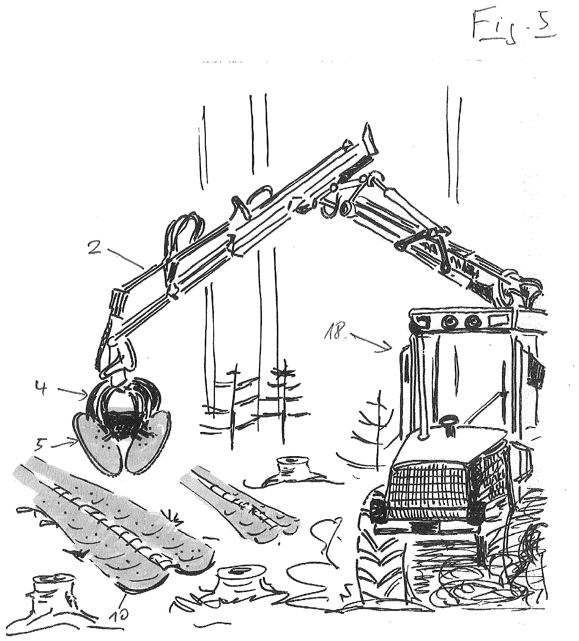

Gemäß Fig. 5 ist wiederum eine Forstmaschine 18 mit einem Greifwerkzeug an einem Ausleger 2 mit einem Scheibenräumgerät 5 gekoppelt.

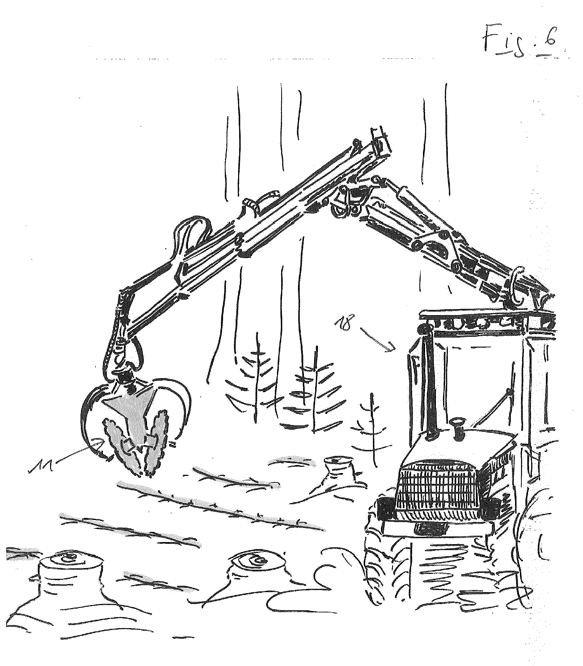

Gemäß Fig. 6 ist die Forstmaschine 18 mit dem Waldsägerät 11 gekoppelt.

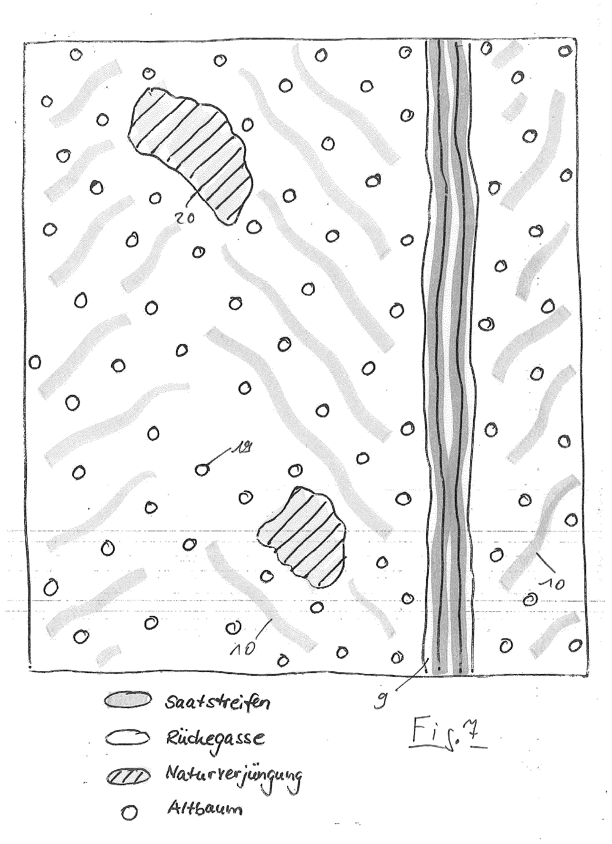

Gemäß Fig. 7 wird mittels der Vorrichtung gemäß Fig. 1 bis 6. ausgehend von einem Fahrweg 9 beidseitig Saatstrecken 10 in den Waldboden eingebracht. Das Einbringen ist an die Gegebenheiten vor Ort angepasst, insbesondere Altbaumbestand 19 oder Naturverjüngung 20.

## Patentansprüche

1. Vorrichtung zum Aussähen von Waldsamen, umfassend ein auf Rädern oder Raupen fahrendes, motorgetriebenes Arbeitsgerät mit einer Schnittstelle für ein Anbaugerät und ein Saataggregat oder Saatgerät, das ausgebildet ist, in Anbaustellung mit der Schnittstelle verbunden zu sein.

2. Vorrichtung nach Anspruch 1, bei der die Schnittstelle eine standardisierte Schnittstelle ist, die auch für andere Arbeitsgeräte nutzbar ist.

3. Vorrichtung nach Anspruch 1 oder 2, bei der die Schnittstelle Einrichtungen zum Fixieren des Anbaugerätes am Arbeitsgerät umfasst.

4. Vorrichtung nach einem der Ansprüche 1 bis 3, bei der die Schnittstelle Einrichtungen zum Übertragen einer Axialbewegung, einer Drehbewegung oder einer anderen Bewegung vom Arbeitsgerät auf das Anbaugerät umfasst.

5. Vorrichtung nach Anspruch 4, bei der die Einrichtungen zum Übertragen einer Bewegung zum Antreiben von Scheiben des Saataggregats oder Saatgerätes und/oder eines Dosiergerätes für Saatgut des Saataggregates oder Saatgerätes benutzt werden.

6. Vorrichtung nach einem der Ansprüche 1 bis 5, bei der Scheiben eines Saataggregats oder Saatgeräts gedreht werden, indem das Saataggregat oder Saatgerät mittels des Arbeitsgerätes auf dem Waldboden verlagert wird, wobei die Scheiben abrollen.

7. Vorrichtung nach Anspruch 6, bei dem ein auf dem Saataggregat oder Saatgerät angeordnetes Dosiergerät von den Scheiben angetrieben wird.

8. Vorrichtung nach einem der Ansprüche 1 bis 7, die einen Adapter umfasst, der ausgebildet ist, das Saatgerät oder Saataggregat mit der Schnittstelle zu verbinden.

9. Vorrichtung nach einem der Ansprüche 1 bis 8, bei der das Arbeitsgerät oder das Saataggregat oder Saatgerät eine Tiefenbegrenzung zum Begrenzen der Eindringtiefe des Saatstreifens oder der Saatrille in den Boden aufweist.

10. Vorrichtung nach Anspruch 9, bei der die Tiefenbegrenzung mindestens einen Sensor, der ausgebildet ist, den Abstand des Sensors von der Bodenoberfläche zu erfassen, eine mit dem Sensor verbundene Steuerungseinrichtung und eine mit der Steuerungseinrichtung verbundene Stelleinrichtung umfasst, die ausgebildet ist, die Lage des Saatgeräts oder des Saataggregats relativ zur Bodenoberfläche auf einen vorgegebenen Wert einzustellen.

11. Vorrichtung nach einem der Ansprüche 1 bis 10, bei dem das Arbeitsgerät durch mindestens einen Verbrennungsmotor und/oder durch mindestens einen Elektromotor angetrieben ist.

12. Vorrichtung nach einem der Ansprüche 1 bis 11, bei der das Arbeitsgerät ein selbstfahrendes Fahrzeug ist.

13. Vorrichtung nach Anspruch 12, bei der das Arbeitsgerät ein ferngesteuertes Fahrzeug ist.

14. Vorrichtung nach Anspruch 12, bei der das Arbeitsgerät ein autonom fahrendes Fahrzeug ist.

15. Vorrichtung nach einem der Ansprüche 1 bis 14, umfassend mindestens eines der folgenden Merkmale:
• ein Ortungssystem,
• eine Einrichtung zum Erfassen der von der Saatmaschine erbrachten Saatleistung,
• eine Einrichtung zur Positionsbestimmung,
• eine Blockiereinrichtung, die das Ausbringen von Saatgut blockiert, wenn die Einrichtung zum Erfassen der Saatleistung eine Betriebsstörung aufweist und/oder das Ortungssystem von der Saatmaschine getrennt ist oder nicht in Betrieb ist und/oder angeforderte Daten nicht zur Verfügung gestellt werden und das Ausbringen von Saatgut nicht blockiert, wenn die Einrichtung zum Erfassen der Saatleistung störungsfrei ist und/oder das Ortungssystem mit der Saatmaschine verbunden ist und in Betrieb ist und/oder angeforderte Daten eingegeben sind.
